# EUROPÄISCHE PATENTSCHRIFT

(11) **EP 2 365 303 B1**
(45) Veröffentlichungstag und Bekanntmachung des Hinweises auf die Patenterteilung: **09.08.2017**
(21) Anmeldenummer: 11156687.3
(22) Anmeldetag: 02.03.2011
(51) Int. Cl.: G01G 3/08, G01G 19/00, G01G 19/44, G01G 19/56

(54) **Waage mit Planarwägezellen**
Scale with planar weighing cells
Balance comprenant cellule de pesage plane

(30) Priorität: 10.02.2011 DE 102011000648; 11.03.2010 DE 102010011032
(43) Veröffentlichungstag der Anmeldung: 14.09.2011
(73) Patentinhaber: Leifheit AG, 56377 Nassau (DE)
(72) Erfinder: Denk, Andre, 45131, Essen (DE); Moddick, Christian, 48317, Drensteinfurth (DE); Stange, Pedro, 65582, Dietz (DE); Emter, Artjom, 56077, Koblenz (DE); Schiebor, Kristian, 56072, Koblenz (DE)
(74) Vertreter: Bungartz, Klaus Peter

(56) Entgegenhaltungen:
- WO-A1-00/39541
- WO-A1-2006/116665
- WO-A1-2008/009794
- WO-A2-02/25228
- GB-A- 2 422 018
- US-A- 4 898 254
- US-A- 4 949 799
- US-A1- 2009 183 928
- US-B1- 7 047 827

## Beschreibung

### Technisches Gebiet

Die Erfindung betrifft eine Waage nach dem Oberbegriff des Anspruchs 1. Diese Waage weist insbesondere eine Lastplatte, eine unterhalb der Lastplatte angeordneten Bodenplatte und Wägezellen auf, die von einem Biegeelement mit einem ersten, lastseitigen Befestigungsabschnitt und einem zweiten, bodenseitigen Befestigungsabschnitt gebildet sind, die über zumindest einen Deformationsabschnitt miteinander verbunden sind, der Mittel zur Messung der Durchbiegung des Deformationsabschnitts infolge einer auf die Lastplatte aufgebrachten, zu wiegenden Last aufweist, und die Mittel zur Messung der Durchbiegung den Messwert an eine Auswerteelektronik weiterzuleiten vermögen, die aus der Durchbiegung der Deformationsabschnitte der Wägezellen ein zu messendes Gewicht zu errechnen und über eine Anzeigevorrichtung auszugeben vermag.

### Stand der Technik

Eine derartige Waage ist aus der WO 95/31700 A1 bekannt. Die Wägezellen dieser Waage sind mit der Lastpatte und in der Bodenplatte vorgesehen Füssen fest verbunden. Der bodenseitige Befestigungsabschnitt ist mit einem Befestigungsloch versehen, in das der elastische Fuß, der durch die Bodenplatte hindurch gesteckt ist, rastend eingesteckt ist. Die US 2009/0183928 A1 beschreibt auch eine derartige Waage.

In einer aus der DE 103 08 803 A1 bekannten Waage wird als Wägezelle eine Doppelbiegebalkenwägezelle verwendet, die in der Mitte der Waage angeordnet ist.

Die Verwendung von Doppelbiegebalkenwägezellen weist den Vorteil auf, dass diese eine Verfälschung des Messergebnisses aufgrund eines Drehmoments ausgleichen können und, dass nur eine einzige Doppelbiegebalkenwägezelle verwendet werden muss, um ein exaktes Messergebnis zu erhalten. Ein das Messergebnis verfälschendes Biegemoment entsteht immer dann, wenn beispielsweise der zu wiegende Gegenstand nicht in der Mitte der Waage angeordnet ist. Dieses Biegemoment ist umso größer je weiter die Stelle, auf der der zu wiegende Gegenstand gestellt wird, von der Mitte der Waage, in der die Doppelbiegebalkenwägezelle angeordnet ist, entfernt ist.

Der Einsatz von Wägezellen mit Doppelbiegebalken weist weiterhin den Nachteil auf, dass aufgrund der Struktur der Doppelbiegebalkenwägezelle der Abstand zwischen der Lastplatte und der Bodenplatte relativ groß ist und damit die Waage eine große Bauhöhe aufweist. Die Bauhöhe erhöht sich weiter bei Waagen, bei denen an der Bodenplatte Standfüße angeordnet sind. Aufgrund der großen Bauhöhe der Waage kann die Waage nur schwierig verstaut werden und es besteht eine erhöhte Stolpergefahr.

Aus der EP 0 505 493 B1 sind Wägezellen der eingangs genannten Art mit einem ersten, lastseitigen Befestigungsabschnitt und einem zweiten, bodenseitigen Befestigungsabschnitt bekannt, die über zumindest einen Deformationsabschnitt miteinander verbunden sind. Diese sind üblicherweise aus einem flachen, ebenen Metallstück geformt, wobei sich zum Beispiel unter Belassung eines mittleren Spaltes der lastseitige Befestigungsabschnitt und der bodenseitigen Befestigungsabschnitt U-förmig um den Deformationsabschnitt schmiegen. Es sind allerdings auch andere Formen möglich. In der EP 0 505 493 B1 ist der Einsatz solcher Wägezellen, im folgenden Planarwägezellen genannt, in Verbindung mit einer Waage beschrieben.

Die aus dem Stand der Technik bekannten Waagen weisen den Nachteil auf, dass aufgrund des möglichen Kraftnebenschlusses Messungenauigkeiten auftreten können.

### Kurzbeschreibung der Erfindung

Es ist die Aufgabe der vorliegenden Erfindung, eine Waage mit der Möglichkeit einer kleinen Bauhöhe zu schaffen, die eine möglichst hohe Messgenauigkeit aufweist.

Die Aufgabe wird durch eine Waage nach Patentanspruch 1 gelöst.

Die erfindungsgemäße Waage weist den Vorteil auf, dass in der Waage zwischen der Lastplatte und der Bodenplatte zumindest drei Planarwägezellen angeordnet sind. Die Planarwägezellen weisen eine geringe Bauhöhe auf, so dass der Abstand zwischen der Lastplatte und der Bodenplatte klein ist. Im Ergebnis verringert sich die Bauhöhe der Waage im Vergleich zu einer Waage, in der eine Doppelbiegebalkenwägezelle eingesetzt wird. Infolge der kleinen Bauhöhe der Waage ergeben sich neue Möglichkeiten für die Verstaubarkeit von dieser. So ist es beispielsweise möglich, die Waage in einem Teppich oder ähnlichem zu integrieren.

Zusätzlich weist die erfindungsgemäße Waage den Vorteil auf, dass zumindest drei Planarwägezellen angeordnet sind. Da zumindest drei Planarwägezellen vorgesehen sind, ist automatisch klar, dass diese jeweils näher zu einer jeweiligen Endseite bzw. zu dem Rand der Waage angeordnet sind als die mittig angeordnete Doppelbiegebalkenwägezelle. Aus diesem Grund ist auch das Drehmoment, das sich bei einem Aufbringen einer Belastung an die Endseite der Waage einstellt, kleiner als bei der bekannten Waage. Genauer gesagt ist das Drehmoment bereits so klein, dass ausreichend genaue Messergebnisse erhalten werden.

Ferner weist die Erfindung den Vorteil auf, dass die Bodenplatte eben und elastisch ausgebildet ist und damit keine Unebenheiten aufweist, die beispielsweise durch ein Vorsehen von Standfüßen entstehen. Der Vorteil der eben ausgebildeten Bodenplatte besteht darin, dass bei einem Messvorgang die Krafteinleitung in die Waage über die gesamte zu dem Untergrund gerichtete Fläche der Bodenplatte erfolgt. Somit existiert keine Möglichkeit eines das Messergebnis verfälschenden Kraftnebenschlusses, da im Gegensatz zu einer bekannten Waage, in der Standfüße verwendet werden, in der erfindungsgemäßen Waage alle Kräfte, die in die Bodenplatte eingeleitet werden, an die Wägezelle weitergeleitet werden.

Eine weitere vorteilhafte Ausgestaltung der Erfindung besteht darin, dass jede der Planarwägezellen an jeweils voneinander unterschiedlichen Endseiten der Waage vorgesehen ist. Eine derartige Anordnung der Planarwägezellen verbessert die Genauigkeit der Messergebnisse, da der Einfluss des Drehmoments auf die Messgenauigkeit verringert wird, da der Abstand zwischen einer Krafteinleitung durch den zu wiegenden Gegenstand bzw. die zu wiegende Person und die Position der zu dem Gegenstand bzw. Person am nächsten liegenden Planarwägezelle klein ist.

Des Weiteren besteht eine vorteilhafte Ausgestaltung der Erfindung darin, dass mehrere Segmente, die jeweils zumindest drei Planarwägezellen aufweisen, vorgesehen sind. Das Vorsehen von mehreren Segmenten und damit mehreren Planarwägezellen weist den Vorteil auf, dass sich bei einem Wiegevorgang die Belastung auf mehrere Segmente bzw. Planarwägezellen verteilt. Somit verringert sich auch die Kraft, die auf eine Planarwägezelle anliegt, im Vergleich zu einer Waage, die nur drei Planarwägezellen aufweist. Im Ergebnis können Planarwägezellen mit einer geringeren Bauhöhe verwendet werden, was die Bauhöhe der gesamten Waage verkleinert. Ein weiterer Vorteil der Verwendung von mehreren Segmenten besteht darin, dass der Einfluss des Drehmoments auf die Messgenauigkeit weiter verringert wird, da der Abstand zwischen dem Gegenstand bzw. der Person und der dazu am nächsten angeordneten Planarwägezelle weiter verkleinert wird.

Wesentliches Merkmal der vorliegenden Erfindung ist die Tatsache, dass nun eine Waage als ultraflache Waage ausgebildet sein kann. Dies bedeutet, dass die Waage beispielsweise eine Höhe von insbesondere 6 bis 16 mm aufweist. Die wesentlichen Bestandteile dieser Waage sind die flexible Bodenplatte, die insbesondere wannenartig ausgebildet sein kann, um das Innere der Waage, also die Wägezellen und die Auswerteelektronik, zu umschließen und abzuschließen, so dass das Eindringen von Schmutz vermieden werden kann. Oberhalb dieser Bodenplatte ist die Lastplatte angeordnet, auf der die zu wiegende Last aufliegt. Nunmehr ist die Lastplatte mit den Wägezellen versehen, diese weist bevorzugt hierzu Aufnahmemittel auf, so dass an der Unterseite der Lastplatte die Wägezelle mit dem lastabhängigen Befestigungsabschnitt befestigt werden kann.

Aufnahmemittel zur Befestigung der Wägezellen können entweder Schraubverbindungen oder auch Einsteckmöglichkeiten sein, in die die Wägezellen eingeschoben werden können, so dass ein nach unten gerichteter Hinterschnitt die Wägezellen in Richtung nach unten zu halten vermag. Auch Federklemmen und sonstige Klemmenbügel können als Aufnahmemittel Verwendung finden. Auf diese Weise wird die Wägezelle mit dem lastseitigen Befestigungsabschnitt fest mit der Lastplatte verbunden.

Im lastseitigen Befestigungsabschnitt der Wägezelle ist der Deformationsabschnitt angeordnet, der wiederum in den bodenseitigen Befestigungsabschnitt ausläuft. Der Deformationsabschnitt ist mit einem oder mehreren Dehnungsmessstreifen versehen, deren Dehnung über eine Widerstandsmessung ermittelt werden kann, so dass die Auswerteelektronik die Deformation der, häufig auch als Planarwägezelle bezeichneten, Wägezelle ermitteln kann und aufgrund dieser Deformation die Last auf der Lastplatte in ein Gewicht umrechnen kann. Hierbei werden alle Signale der verwendeten Wägezellen, üblicherweise sind es vier Wägezellen, berücksichtigt und zu einem Gesamtergebnis verrechnet.

Bodenseitig ist der Befestigungsabschnitt nicht fest mit der Bodenplatte verbunden, sondern liegt bevorzugt auf Erhebungen oder nach oben hervorspringenden Stützen auf. Ein seitliches Verrutschen der Befestigungsabschnitte kann über weitere nach oben hervorspringende Erhebungen oder Randbegrenzungen vermieden werden, so dass der Befestigungsabschnitt in einem Rahmen liegt, der einerseits das lose Abstützen ermöglicht und andererseits seitliches Verschieben zu unterdrücken vermag. Dieser Rahmen ist bevorzug so ausgebildet, dass sich zwischen dem bodenseitigen Befestigungsabschnitt und den Rahmenelementen ein gewisses Spiel ergibt, so dass Querkräfte nicht zu einer Fehlmessung führen können.

Die Bodenplatte ist bevorzugt mit der Lastplatte über Schnappverbindungen verbunden. Um Batterien austauschen zu können oder auch die Auswerteelektronik warten zu können, können diese Verbindungen lösbar ausgestaltet sein, sofern dies nicht gewünscht ist, ist auch eine Verbindung möglich, die nur unter Zerstörung der einzelnen Verbindungselemente gelöst werden kann. Ein Batteriefach kann auch über eine zusätzliche Batteriefachabdeckung zugänglich sein, gleiches gilt für die Auswerteelektronik. Diese Auswerteelektronik ist ebenso wie die Batteriefachhalterung bevorzugt an der Lastplatte angeordnet.

Die Bodenplatte ist so flexibel, dass sie sich vollflächig auf den Untergrund aufzulegen vermag und nur noch die jeweiligen Signale an der Lastübertragung über die Wägezellen gemessen werden müssen. Auf diese Weise kann kein Kraftnebenschluss erfolgen, der das Messergebnis verfälscht, da die Durchbiegungswege der Wägezellen so groß sind, dass die üblichen Unebenheiten eines Untergrunds nicht in der Lage sind, einen Kraftnebenschluss zu erzeugen.

### Kurze Beschreibung der Zeichnungsfiguren

In den Zeichnungen ist der Erfindungsgegenstand schematisch dargestellt und wird anhand der Figuren nachfolgend beschrieben, wobei gleich wirkende Elemente mit denselben Bezugszeichen versehen sind. Dabei zeigen:
Fig. 1 die Lastplatte einer Waage mit Planarwägezellen in einer Ansicht von unten und ohne Bodenplatte in einer ersten Ausführungsform,
Fig. 2A eine Draufsicht auf eine schematisch dargestellte Waage einer zweiten Ausführungsform, die mehrere Segmente aufweist, ohne Lastplatte und Bodenplatte,
Fig. 2B eine Schnittansicht entlang der in Fig. 2A gezeigten Schnittlinie A-A.

### Beschreibung der Ausführungsarten

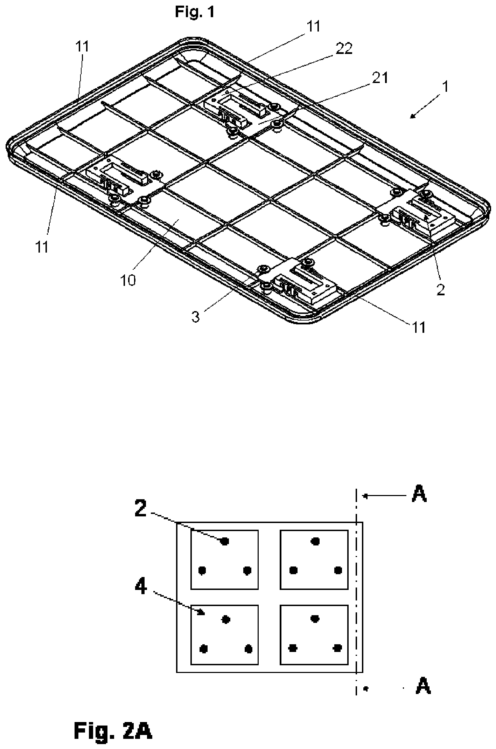

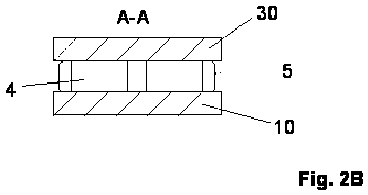

Die in Fig. 1 gezeigte Waage 1 einer ersten Ausführungsform besitzt eine rechteckförmige Lastplatte 10. Die Lastplatte 10 ist wie die nicht dargestellte Bodenplatte 30 wannenartig ausgebildet und weist Vorsprünge 11 auf, die entlang der gesamten Endseite der Lastplatte 10 verlaufen. Die Vorsprünge 11 ragen in Richtung zu einer in Fig. 2B dargestellten Lastplatte 10, die auf die wannenförmige Bodenplatte 30 gesetzt ist, so dass sich ein abgeschlossener Waagenkörper ausbildet.

An der Unterseite der Lastplatte 10 sind in dieser Ausführungsform vier als Planarwägezellen ausgebildete Wägezellen 2 angeordnet. Es sind auch Ausführungsformen vorstellbar, in denen nur drei Planarwägezellen oder mehr als vier Planarwägezellen vorgesehen sind. Die Planarwägezellen bestehen aus einem ersten bodenseitigen Befestigungsabschnitt 22 und einem zweiten lastseitigen Befestigungsabschnitt 21. Der bodenseitige Befestigungsabschnitt 22 liegt auf Vorsprüngen, die sich von der Bodenplatte nach oben erstrecken, auf. Der lastseitige Befestigungsabschnitt 21 ist an mindestens einer Position mittels eines Befestigungsmittels 3, wie beispielsweise Schrauben oder einer Einschubmöglichkeit hinter einen Hinterschnitt mit der Lastplatte 10 verbunden.

Die einzelnen Planarwägezellen 2 sind dabei jeweils an voneinander unterschiedlichen Endseiten der Lastplatte 10 angeordnet. Genauer gesagt sind zwei Planarwägezellen 2 an zwei sich gegenüberliegenden Ecken angeordnet. Die restlichen zwei Planarwägezellen 2 sind jeweils zwischen der in der jeweiligen Ecke vorgesehenen Planarwägezelle 2 und der jeweils anderen Ecke der Lastplatte 10, in der keine Planarwägezelle 2 vorgesehen ist, angeordnet. Eine derartige Anordnung der Planarwägezellen 2 soll eine Verfälschung des Messergebnisses verhindern, wenn der zu wiegende Gegenstand in die Nähe oder an den Rand der Waage 1 gestellt wird bzw. wenn sich die zu wiegende Person in die Nähe des Randes oder an den Rand der Waage 1 stellt. Es ist offensichtlich, dass bei einer Ausführungsform, die nur drei Planarwägezellen aufweist, diese Planarwägezellen 2 an den Endseiten der Lastplatte 10 und/ oder in den Ecken der Lastplatte 10 oder in einer anderen Anordnungsform angeordnet sein können.

Fig. 2A zeigt eine Draufsicht auf eine schematisch dargestellte Waage 1 in einer zweiten Ausführungsform, die mehrere Segmente 4 aufweist. Im Folgenden werden als Segmente verschiedene Abschnitte innerhalb der Waage 1 angesehen, innerhalb der zumindest drei Planarwägezellen 2 angeordnet sind. Die Segmente können gleich groß sein oder auch nicht.

In dieser Ausführungsform weist die Waage 1 vier Segmente 4 auf. Die Planarwägezellen 2 sind in den einzelnen Segmenten 4 jeweils an gleichen Stellen angeordnet. Genauer gesagt sind die einzelnen Planarwägezellen 2 in einem einzelnen Segment 4 so angeordnet, dass die Planarwägezellen 2 an voneinander unterschiedlichen Endbereichen des Segments 4 vorgesehen sind. Es sind auch Ausführungsformen vorstellbar, in denen die Planarwägezellen in den einzelnen Segmenten nicht immer an der gleichen Stelle vorgesehen sind. Ferner sind Ausführungsformen vorstellbar, in denen die Planarwägezellen nicht an den Endbereichen des Segments 4 vorgesehen sind, sondern in einer anderen Anordnungsform innerhalb der Segmente.

Die Segmente ermöglichen ferner die Realisierung besonders dünner und unauffälliger Waagen. So können zum Beispiel solche Segmente unterhalb eines Teppichs angeordnet werden, wobei mehrere Segmente zusammengeschaltet dann eine Waage ergeben. Hier müssen die einzelnen Segmente nicht miteinander verbunden sein, es ist dann ausreichend, wenn die Messergebnisse der Segmente durch die Auswerteelektronik miteinander kombiniert und zu einem Gesamtgewicht umgerechnet werden.

Fig. 2B zeigt eine Schnittansicht entlang der in Fig. 2A gezeigten Schnittlinien A-A. Die Segmente 4 und damit die Planarwägezellen 2 sind zwischen der Bodenplatte 30 und der Lastplatte 10 angeordnet. Die einzelnen Segmente 4 sind durch eine Ummantelung 5, die aus einem elastischen Material besteht, miteinander verbunden. Die Ummantelung 5 steht dabei sowohl mit der Lastplatte 10 als auch mit der Bodenplatte 30 in Kontakt.

Im Folgenden wird der Messvorgang erläutert. Wenn ein Gegenstand auf den Rand der Lastplatte 10 gestellt wird bzw. wenn sich eine Person auf den Rand der Lastplatte 10 stellt, wird die Belastung auf die mit der Lastplatte 10 in Kontakt stehende Planarwägezelle 2 übertragen. Im Ergebnis wird die Kraft auf den zweiten Befestigungsabschnitt 22 der Planarwägezelle 2 übertragen, der sich infolge davon biegt. Mittels einer aus dem Stand der Technik bekannten Messelektrik, die einen auf der Planarwägezelle 2 vorgesehenen Dehnmessstreifen umfasst, kann die Biegung und damit das Gewicht der zu messenden Person bzw. des zu messenden Gegenstands ermittelt und ausgegeben werden. Da zumindest drei Planarwägezellen 2 verwendet werden, die mit der Lastplatte 10 an unterschiedlichen Stellen in Kontakt sind, ist der Einfluss des auftretenden Drehmoments auf die Messgenauigkeit vernachlässigbar.

Eine weitere bevorzugte Ausgestaltung der Erfindung weist eine Lastplatte auf, die von einem Kleincomputer, so wie sie derzeit üblicherweise mit Touchscreen oder normalem Monitor vertrieben werden, gebildet ist. Diese Lastplatte hat dann bereits die Möglichkeit einer Anzeige, so dass z. B. die Auswerteelektronik über eine drahtlose Datenverbindung, beispielsweise einer Bluetooth-Verbindung, mit dem Kleincomputer kommunizieren kann und so das Messergebnis auf dem Bildschirm des Kleincomputers anzeigen kann. Alternativ können auch die Wägezellen selbst eine Sendemöglichkeit aufweisen, so dass das Signal der Wägezellen an den Kleincomputer über eine solche drahtlose Verbindung übertragen werden kann, so dass auch die Auswerteelektronik in den Kleincomputer integriert sein kann.

In allen Fällen muss der Kleincomputer an seiner Unterseite eine Möglichkeit aufweisen, zum einen die Bodenplatte zu befestigen und zum anderen die Wägezellen aufzunehmen. Beides kann beispielsweise über eine Tasche realisiert sein, in die der Kleincomputer einsteckbar ist und die an der Unterseite des Kleincomputers die Möglichkeit zur Befestigung der Wägezellen und der Bodenplatte aufweist. Alternativ kann an den die Lastplatte bildenden Kleincomputer auch ein Rahmen angebracht werden, der an seiner Unterseite die Befestigungsmittel für die Wägezellen aufweist.

Die vorgenannten Ausführungsbeispiele sind nur Beispiele, wie eine flache Waage mit hoher Messgenauigkeit umgesetzt werden kann.

### Liste der Bezugszeichen

- 1: Waage
- 10: Lastplatte
- 11: Vorsprung
- 2: Wägezelle
- 21: erster Abschnitt
- 22: zweiter Abschnitt
- 3: Befestigungsmittel
- 30: Bodenplatte
- 4: Segment
- 5: Ummantelung

## Patentansprüche

1. Waage (1), die insbesondere als eine Personenwaage, Briefwaage oder als Küchenwaage ausgebildet ist, mit einer Lastplatte (10), einer unterhalb der Lastplatte (10) angeordneten Bodenplatte (30) und Wägezellen (2), die von einem Biegeelement mit einem ersten, lastseitigen Befestigungsabschnitt (21) und einem zweiten, bodenseitigen Befestigungsabschnitt (22) gebildet sind, die über zumindest einen Deformationsabschnitt miteinander verbunden sind, der Mittel zur Messung der Durchbiegung des Deformationsabschnitts infolge einer auf die Lastplatte (10) aufgebrachten, zu wiegenden Last aufweist, wobei die Mittel zur Messung der Durchbiegung den Messwert an eine Auswerteelektronik weiterzuleiten vermögen, die aus der Durchbiegung der Deformationsabschnitte der Wägezellen (2) ein zumessendes Gewicht zu errechnen und über eine Anzeigevorrichtung auszugeben vermag, **dadurch gekennzeichnet, dass** die Wägezellen (2) mit dem lastseitigen Befestigungsabschnitt (21) an der Lastplatte (10) befestigt sind und mit dem bodenseitigen Befestigungsabschnitt (22) auf Stützen aufliegen, die von der Bodenplatte (30) nach oben gerichtet sind und den bodenseitigen Befestigungsabschnitt (22) abzustützen vermögen, wobei die Bodenplatte eben und elastisch ausgebildet ist und keine Unebenheiten aufweist, so dass bei einem Messvorgang die Krafteinleitung in die Waage über die gesamte zu dem Untergrund gerichtete Fläche der Bodenplatte erfolgt.

2. Waage (1) nach Anspruch 1, **dadurch gekennzeichnet, dass** die Bodenplatte (30) als flexible Platte ausgebildet ist, wobei die Elastizität derart gewählt ist, dass die Bodenplatte (30) mit unterhalb der Wägezellen (2) angeordneten Stützbereichen auf einem Untergrund aufliegen.

3. Waage (1) nach Anspruch 2, **dadurch gekennzeichnet, dass** die Stützbereiche mit den übrigen Bereichen der Bodenplatte (30) eine ebene Unterseite bilden.

4. Waage (1) nach dem vorhergehenden Anspruch, **dadurch gekennzeichnet, dass** unterhalb der Bodenplatte (30), insbesondere unterhalb der Stützbereiche eine dünne, reibungshemmende Schicht als Standfläche zur Auflage auf den Untergrund angeordnet ist.

5. Waage (1) nach einem der vorhergehenden Ansprüche, **dadurch gekennzeichnet, dass** sie aus zumindest zwei Segmenten (4) besteht, von denen jedes eine Teillastplatte und eine Teilbodenplatte vorgesehen sind, die jeweils zumindest drei Wägezellen (2) aufweisen, die mit dem lastseitigen Befestigungsabschnitten (21) jeweils an der Teillastplatte befestigt sind und mit bodenseitigen Befestigungsabschnitten (22) jeweils auf Stützen aufliegen, die von der Teilbodenplatte nach oben gerichtet sind und den bodenseitigen Befestigungsabschnitt (22) jeweils abzustützen vermögen, wobei die Teillastplatten die Lastplatte (10) und die Teilbodenplatten die Bodenplatte (30) bilden und die Auswerteelektronik aus den ermittelten Lasten der auf den Teillastplatten aufliegenden Lasten das Gesamtgewicht der auf der von den einzelnen Teillastplatten gebildeten Lastplatte (10) aufliegenden Last zu ermitteln vermag.

6. Waage (1) nach Anspruch 5, **dadurch gekennzeichnet, dass** die Wägezellen (2) an jeweils voneinander unterschiedlichen Endbereichen der Segmente (4) angeordnet sind.

7. Waage (1) nach Anspruch 5 oder 6, **dadurch gekennzeichnet, dass** eine Ummantelung (5) die Segmente umschließt.

8. Waage (1) nach Anspruch 7, **dadurch gekennzeichnet, dass** die Ummantelung (5) aus einem flexiblen Material besteht.

9. Waage (1) nach einem der Ansprüche 7 oder 8, **dadurch gekennzeichnet, dass** die Segmente von einer, die Bodenplatte (30) bildenden unteren Ummantelung und einer zweiten, die Lastplatte (10) bildenden oberen Ummantelung umschlossen sind.

10. Waage (1) nach einem der Ansprüche 7 oder 8, **dadurch gekennzeichnet, dass** die Ummantelung (5) mit der Bodenplatte (30) und der Lastplatte (10) in Kontakt befindet, insbesondere die Bodenplatte (30) und die Lastplatte (10) umschließt.

11. Waage (1) nach einem der vorhergehenden Ansprüche, **dadurch gekennzeichnet, dass** das lastseitige Befestigungselement der Wägezellen (2) mit der Lastplatte verschraubt ist.

12. Waage (1) nach einem der vorhergehenden Ansprüche, **dadurch gekennzeichnet, dass** die Wägezellen (2) mit dem lastseitigen Befestigungselement unter an der Lastplatte angeordnete Hinterschnitte geschoben sind.

13. Waage (1) nach einem der vorhergehenden Ansprüche, **dadurch gekennzeichnet, dass** die Lastplatte (10) über Haltebügel oder sonstige Schnappverbindungen unmittelbar oder über die Wägezellen (2) mit der Bodenplatte (30) verbunden ist, wobei die Verbindung den für die Auslenkung der Wägezellen (2) notwendigen Bewegungsspielraum belässt.

14. Waage (1) nach dem vorhergehenden Anspruch, **dadurch gekennzeichnet, dass** die Lastplatte (10) derart mit der Bodenplatte (30) verbunden ist, dass die Verbindung nur unter Zerstörung der Haltebügel oder der sonstige Schnappverbindung lösbar ist, wobei die Waage zur Energieversorgung zumindest eine Solarzelle aufweist.

15. Waage (1) nach einem der vorhergehenden Ansprüche, **dadurch gekennzeichnet, dass** die Lastplatte (10) eine Einschubmöglichkeit für einen Kleincomputer, insbesondere einen Tablett-PC, ein Smartphone oder einen sonstigen, flachen Minicomputer, aufweist oder von dem Kleincomputer gebildet ist.

## Claims

1. Scales (1), in particular designed as personal scales, postal scales or as kitchen scales, with a load plate (10), a base plate (30) arranged below the load plate (10), and weighing cells (2) formed by a bending element with a first load-side fitting section (21) and a second floor-side fitting section (22), connected via at least one deformation section having means for measuring the sag of the deformation section due to a load to be weighed placed on the load plate (10), wherein the means for measuring the sag can forward the measurement value to evaluation electronics, which will calculate a weight to be measured from the sag of the deformation sections of the weighing cells (2) and output the same via a display device, **characterised in that** the weighing cells (2) are fitted on the load plate (10) with the load-side fitting section (21) and lie on supports directed upwards from the floor plate (30) with the floor-side fitting section (22) and can support the floor-side fitting section (22), wherein the floor plate is designed level and elastic and has no unevenness, so the force induction into the scales is realised across the entire surface of the floor plate facing the substrate during a measuring process.

2. Scales (1) according to claim 1, **characterised in that** the floor plate (30) is designed as a flexible plate, wherein the elasticity is selected in such a way that the floor plate (30) lies on a substrate with supporting areas arranged below the weighing cells (2).

3. Scales (1) according to claim 2, **characterised in that** that support areas form an even underside with the other areas of the floor plate (30).

4. Scales (1) according to the preceding claim, **characterised in that** a thin, friction-free layer is arranged as a platform for laying onto the ground below the floor plate (30), in particular below the support areas.

5. Scales (1) according to one of the preceding claims, **characterised in that** it consists of at least two segments (4), for each of which a part-load plate and a part-floor plate is envisaged, which each have at least three weighing cells (2), each fitted on the part-load plate with the load-side fitting sections (21) and each lying on supports directed upwards from the part-floor plate with floor-side fitting sections (22) that can each support the floor-side fitting section (22), wherein the part-load plates form the load plate (10) and the par-floor plates the floor plate (30), and the evaluation electronics can calculate the total weight of the load placed on the load plate (10) formed by the individual part-load plates from the calculated loads of the loads lying on the part-load plates.

6. Scales (1) according to claim 5, **characterised in that** the weighing cells (2) are each arranged in end sections of the segments (4) that differ from each other.

7. Scales (1) according to claim 5 or 6, **characterised in that** a casing (5) encloses the segments.

8. Scales (1) according to claim 7, **characterised in that** the casing (5) consists of a flexible material.

9. Scales (1) according to one of the claims 7 or 8, **characterised in that** the segments are enclosed by a lower casing forming the floor plate (30) and a second upper casing forming the load plate (10).

10. Scales (1) according to one of the claims 7 or 7, **characterised in that** the casing (5) is in contact with the floor plate (30) and the load plate (10), and in particular encloses the floor plate (30) and the load plate (10).

11. Scales (1) according to one of the preceding claims, **characterised in that** the load-side fitting element of the weighing cells (2) is screwed into the load plate.

12. Scales (1) according to one of the preceding claims, **characterised in that** the weighing cells (2) are pushed under rear cuts arranged on the load plate with the load-side fitting element.

13. Scales (1) according to one of the preceding claims, **characterised in that** the load plate (10) is connected with the floor plate (30) directly via holding brackets or other snap-in connections or via the weighing cells (2), wherein the connection leaves the necessary play for deflecting the weighing cells (2).

14. Scales (1) according to the preceding claim, **characterised in that** the load plate (10) is connected with the floor plate (30) in such a way that the connection can be disconnected only by destroying the holding brackets or the other snap-in connection, wherein the scales have at least one solar cell as an energy supply.

15. Scales (1) according to one of the preceding claims, **characterised in that** the load plate (10) has an insertion possibility for a small computer, in particular a tablet PC, a smart phone or another flat mini-computer, or is formed by the small computer.

## Revendications

1. Balance (1), formée notamment comme un pèse-personne, pèse-lettre ou balance de cuisine, dotée d'un panneau de charge (10), d'une plaque de base (30) disposée en dessous du panneau de charge (10) et de cellules de pesage (2) qui sont formées d'un élément de flexion avec une première section de fixation côté charge (21) et une deuxième section de fixation côté base (22), qui sont reliées ensemble par au moins une section de déformation qui présente des moyens de mesurer la flexion de la section de déformation suite à une charge à peser disposée sur le panneau de charge (10), les moyens de mesurer la flexion étant capables de transmettre la valeur mesurée à une électronique d'exploitation qui est capable de calculer un poids à mesurer à partir de la flexion des sections de déformation des cellules de pesage (2) et de l'émettre par un dispositif d'affichage, **caractérisée en ce que** les cellules de pesage (2) sont fixées au panneau de charge (10) avec la section de fixation côté charge (21) et reposent sur des supports avec la section de fixation côté base (22) qui sont orientés de la plaque de base (30) vers le haut et sont capables de soutenir la section de fixation côté base (22), la plaque de base étant formée plate et élastique et ne présentant aucune irrégularité de sorte que la force est appliquée au cours d'une opération de mesure dans la balance sur toute la surface de la plaque de base orientée vers le fond.

2. Balance (1) selon la revendication 1, **caractérisée en ce que** la plaque de base (30) est formée comme une plaque flexible, l'élasticité étant choisie de telle sorte que la plaque de base (30) repose sur un fond avec des parties de support disposées en dessous des cellules de pesage (2).

3. Balance (1) selon la revendication 2, **caractérisée en ce que** les parties de support forment une surface inférieure plate avec les parties restantes de la plaque de base (30).

4. Balance (1) selon la revendication précédente, **caractérisée en ce qu'**une couche fine antifriction en dessous de la plaque de base (30), notamment en dessous des parties de support, est disposée comme surface de contact pour le revêtement sur le fond.

5. Balance (1) selon l'une des revendications précédentes, **caractérisée en ce qu'**elle se compose d'au moins deux segments (4), dont chacun est prévu avec un panneau de charge partiel et une plaque de base partielle qui présentent respectivement au moins trois cellules de pesage (2) qui sont fixées respectivement au panneau de charge partiel avec la section de fixation côté charge (21) et reposent respectivement sur des supports avec la section de fixation côté base (22) qui sont orientés de la plaque de base partielle vers le haut et sont capables de soutenir respectivement la section de fixation côté base (22), les panneaux de charge partiels formant le panneau de charge (10) et les plaques de base partielles formant la plaque de base (30) et l'électronique d'exploitation étant capable d'établir le poids total de la charge reposant sur le panneau de charge (10) formé des différents panneaux de charge partiels à partir des charges établies des charges reposant sur les panneaux de charge partiels.

6. Balance (1) selon la revendication 5, **caractérisée en ce que** les cellules de pesage (2) sont disposées aux parties d'extrémité différentes les unes des autres des segments (4).

7. Balance (1) selon la revendication 5 ou 6, **caractérisée en ce qu'**une enveloppe (5) entoure les segments.

8. Balance (1) selon la revendication 7, **caractérisée en ce que** l'enveloppe (5) est composée d'un matériau flexible.

9. Balance (1) selon l'une des revendications 7 ou 8, **caractérisée en ce que** les segments sont entourés d'une enveloppe inférieure formant la plaque de base (30) et d'une deuxième enveloppe supérieure formant le panneau de charge (10).

10. Balance (1) selon l'une des revendications 7 ou 8, **caractérisée en ce que** l'enveloppe (5) se trouve en contact avec la plaque de base (30) et le panneau de charge (10), entourant notamment la plaque de base (30) et le panneau de charge (10).

11. Balance (1) selon l'une des revendications précédentes, **caractérisée en ce que** l'élément de fixation côté charge des cellules de pesage (2) est vissé avec le panneau de charge.

12. Balance (1) selon l'une des revendications précédentes, **caractérisée en ce que** les cellules de pesage (2) sont poussées avec l'élément de fixation côté charge en dessous des contre-dépouilles disposées au panneau de charge.

13. Balance (1) selon l'une des revendications précédentes, **caractérisée en ce que** le panneau de charge (10) est raccordé par des étriers de fixation ou d'autres raccords encliquetables directement ou par les cellules de pesage (2) à la plaque de base (30), le raccordement laissant l'espace de mouvement nécessaire au déplacement des cellules de pesage (2).

14. Balance (1) selon la revendication précédente, **caractérisée en ce que** le panneau de charge (10) est raccordé à la plaque de base (30) de telle sorte que le raccordement ne peut être détaché qu'en détruisant les étriers de fixation ou les autres raccords encliquetables, la balance présentant au moins une cellule solaire destinée à l'alimentation en énergie.

15. Balance (1) selon l'une des revendications précédentes, **caractérisée en ce que** le panneau de charge (10) présente une possibilité d'insérer un mini-ordinateur, en particulier une tablette, un smartphone ou un autre mini-ordinateur plat ou est formé du mini-ordinateur.
